(19) Europäisches Patentamt
European Patent Office
Office européen des brevets

(11) EP 4 578 906 A1

(12) EUROPEAN PATENT APPLICATION

(43) Date of publication:
**02.07.2025 Bulletin 2025/27**

(21) Application number: **24222859.1**

(22) Date of filing: **23.12.2024**

(51) International Patent Classification (IPC):
***C08L 5/00*** *(2006.01)* ***C08B 5/14*** *(2006.01)*
***C08J 5/18*** *(2006.01)* ***G02B 5/22*** *(2006.01)*

(52) Cooperative Patent Classification (CPC):
(C-Sets available)
**C08L 5/00; C08B 5/14; C08J 5/18; G02B 5/223**
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.12.2023 JP 2023222437**

(71) Applicants:
- **Yokogawa Electric Corporation**
  **Tokyo 180-8750 (JP)**
- **Kumamoto Prefecture**
  **Kumamoto-shi, Kumamoto 862-8570 (JP)**

(72) Inventors:
- **Yokomizo, Tomofumi**
  **Musashino-shi, Tokyo, 180-8750 (JP)**
- **Mochiduki, Makoto**
  **Musashino-shi, Tokyo, 180-8750 (JP)**
- **Iwamoto, Shinichiro**
  **Musashino-shi, Tokyo, 180-8750 (JP)**
- **Horikawa, Maki**
  **Kumamoto-shi, Kumamoto, 862-0901 (JP)**
- **Nagaoka, Shoji**
  **Kumamoto-shi, Kumamoto, 862-0901 (JP)**

(74) Representative: **Grünecker Patent- und Rechtsanwälte**
**PartG mbB**
**Leopoldstraße 4**
**80802 München (DE)**

# (54) COMPOSITE AND HEAT-RAY ABSORBING FILM

(57) The present disclosure provides a composite and a heat-ray absorbing film having an excellent heat-ray absorption property without using raw materials with a high environmental load. One of the embodiment is a composite containing an amorphous sulfated polysaccharide and a polythiophene.

EP 4 578 906 A1

(52) Cooperative Patent Classification (CPC): (Cont.)

C-Sets
**C08L 5/00, C08G 61/122;**
**C08L 5/00, C08G 75/00;**
**C08L 5/00, C08L 41/00**

## Description

BACKGROUND

Technical Field

The present disclosure relates to a composite and a heat-ray absorbing film.

Background Art

About 40% of the radiant energy of solar rays is light in the infrared wavelength range or longer, and this light is called a heat ray because it has a high thermal effect. It is known that a window material used in an office building, an automobile, and the like, which is required to have transparency, generally transmits heat rays well, and this causes an increase in temperature inside a room or a vehicle.

For the purpose of energy saving, it has been considered to impart a function of reflecting or absorbing heat rays to the window material. As means for imparting the function of reflecting or absorbing heat rays (heat-ray shielding property) to the window material, for example, a method has been proposed in which an infrared absorbing film containing tin-doped indium oxide (ITO) particulates, antimony-doped tin oxide (ATO) particulates, cesium tungstate, or the like is adhered to a window glass.

Antimony and cesium are both toxic, and indium is costly since it is a rare metal, and thus alternative materials to these materials are strongly desired. There has been a problem that when an additive amount of inorganic particulates having a heat-ray shielding property is increased to decrease the solar transmittance in order to enhance the heat-ray shielding property, the transmittance of visible light also decreases, and conversely, when the transmittance of visible light is increased in order to let in external light, the solar transmittance increases, resulting in a decrease in the heat-ray shielding property.

For example, a heat-ray absorbing material including a sulfated cellulose nanocrystal represented by the following Chemical Formula 1 obtained from fibrous cellulose having a fiber width of 3 nm to 1500 nm, and a polythiophene doped with the sulfated cellulose nanocrystal is known (for example, see JP 2020-111747 A).

[Chem. 1]

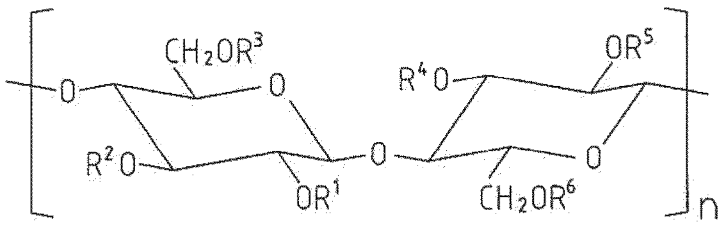

···Chemical Formula 1

$R^1$ to $R^6$ shown in Chemical Formula 1 each independently represent a hydrogen atom, a sulfonate group, or an alkyl sulfonate group having 1 to 6 carbon atoms, and at least one of $R^1$ to $R^6$ is a sulfonate group or an alkyl sulfonate group having 1 to 6 carbon atoms. ***n*** in Chemical Formula 1 indicates the number of repetitions of the unit in the brackets.

SUMMARY

According to studies by the inventors, the heat-ray absorbing material disclosed in JP 2020-111747 A has an insufficient near-infrared absorption capacity for light of, for example, 800 nm to 1800 nm, and a heat-ray absorption property (obtained by dividing the absorbance of near-infrared light by the absorbance of visible light) is insufficient.

Therefore, the present disclosure provides a composite and a heat-ray absorbing film having an excellent heat-ray absorption property without using raw materials with a high environmental load.

The inventors have conducted intensive studies to solve the above-described problem, and have found that a composite containing an amorphous sulfated polysaccharide and a polythiophene becomes a composite having an excellent heat-ray absorption property without using raw materials with a high environmental load, leading to the present disclosure.

Exemplary aspects of the embodiments are described as follows.

[1] A composite comprising: an amorphous sulfated polysaccharide; and a polythiophene.

[2] The composite according to [1], wherein the amorphous sulfated polysaccharide is at least one amorphous sulfated polysaccharide selected from the group consisting of carrageenan, sacran, rhamnan sulfate, fucoidan, chondroitin sulfate, porphyran, funoran, dermatan sulfate, and heparin.
[3] The composite according to [1] or [2], wherein the amorphous sulfated polysaccharide is at least one carrageenan selected from the group consisting of lambda-carrageenan, kappa-carrageenan, and iota-carrageenan.
[4] The composite according to any one of [1] to [3], wherein the amorphous sulfated polysaccharide is at least one sulfated polysaccharide selected from the group consisting of a sulfated polysaccharide represented by the following general formula (1) and a sulfated polysaccharide represented by the following general formula (2),

[Chem. 2]

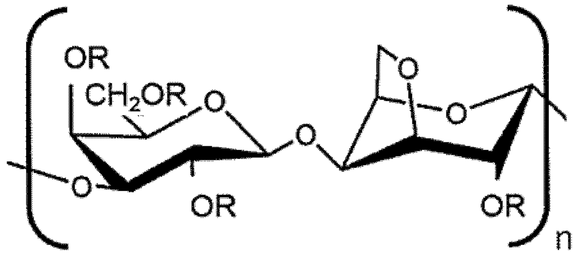

· · · (1)

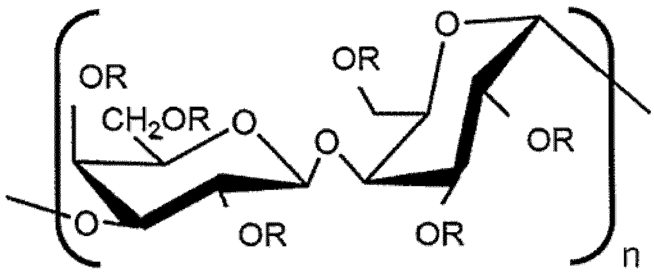

· · · (2)

wherein, in the general formulae (1) and (2), each R is independently a hydrogen atom or a group represented by the following general formula (3), at least one of the Rs in the brackets is a group represented by the following general formula (3), and n represents the number of repetitions of the unit in the brackets,

[Chem. 3]

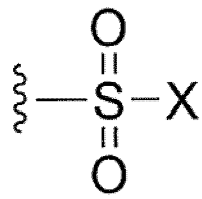

· · · (3)

wherein, in the general formula (3), X is a hydroxyl group or $-O^{-}(M^{m+})_{1/m}$, ***m*** is an integer of 1 or more and 3 or less, $M^{m+}$ is an m-valent cation, and a wavy line is a binding site to another atom.

[5] The composite according to any one of [1] to [4], wherein an amount of a sulfate ester group substituent in the amorphous sulfated polysaccharide is 2.0 mmol/g or more and 6.0 mmol/g or less.
[6] The composite according to any one of [1] to [5], wherein a number of constituent monosaccharides of the amorphous sulfated polysaccharide is 200 or more.
[7] The composite according to any one of [1] to [6], wherein the amorphous sulfated polysaccharide is iota-carrageenan.
[8] The composite according to any one of [1] to [7], wherein a value obtained by dividing an absorbance at 1800 nm by an absorbance at 500 nm of an aqueous dispersion containing the composite at a concentration of 0.01 wt% is 4.5 or more.

[9] The composite according to any one of [1] to [8], wherein the value obtained by dividing the absorbance at 1800 nm by the absorbance at 500 nm of the aqueous dispersion containing the composite at a concentration of 0.01 wt% is 4.5 or more, the absorbance at 500 nm is 0.010 or more and 0.200 or less, and the absorbance at 1800 nm is 0.200 or more and 1.200 or less.

[10] The composite according to any one of [1] to [9], wherein a viscosity of an aqueous dispersion containing the composite at a concentration of 2 wt% is 100 mPa•s or more and 5000 mPa•s or less, the viscosity being measured at a rotation speed of 6.0 rpm and at 20°C.

[11] An aqueous dispersion comprising: an amorphous sulfated polysaccharide; a polythiophene; at least one resin selected from the group consisting of a water-soluble resin and an aqueous emulsion resin; and water.

[12] A heat-ray absorbing film comprising the composite according to any one of [1] to [10].

[13] The heat-ray absorbing film according to [12], wherein a value obtained by dividing an absorbance at 1800 nm by an absorbance at 500 nm is 4.5 or more.

[14] A layered body, comprising the heat-ray absorbing film according to [12] or [13], and an adhesive layer and a release layer layered on one side of the heat-ray absorbing film.

With the present disclosure, it is possible to provide a composite and a heat-ray absorbing film having an excellent heat-ray absorption property without using raw materials with a high environmental load.

## DETAILED DESCRIPTION

A composite, an aqueous dispersion, a heat-ray absorbing film, and a layered body of the embodiment are described in detail below.

One aspect of the embodiment is a composite containing an amorphous sulfated polysaccharide and a polythiophene. The composite of the embodiment does not use raw materials with a high environmental load, and has an excellent heat-ray absorption property. Compared with a composite containing a sulfate esterified fine cellulose fiber and a polythiophene, the composite of the embodiment can increase a solid content concentration in the aqueous dispersion having a similar viscosity. Thus, when a heat-ray absorbing film having a similar dried film thickness is produced, the aqueous dispersion prepared from the composite of the embodiment can reduce a coating film thickness compared with the composite containing the sulfate esterified fine cellulose fiber and the polythiophene, and thus the drying time can be significantly shortened. When the coating is applied at a similar coating film thickness, a film thickness of the heat-ray absorbing film can be increased by using the aqueous dispersion prepared from the composite of the embodiment compared with the composite containing the sulfate esterified fine cellulose fiber and the polythiophene.

The embodiment will be described in detail below.

### (Amorphous Sulfated Polysaccharide)

The composite and the aqueous dispersion of the embodiment contain the amorphous sulfated polysaccharide. Among sulfated polysaccharides, those exhibiting crystallinity, such as sulfated cellulose, are not included in the amorphous sulfated polysaccharides. In the present disclosure, "amorphous" means that the cellulose type I crystallinity calculated by the following Mathematical Formula 1 based on a measurement result of a diffraction intensity by an X-ray diffractometer is less than 5%.

$$\text{Cellulose type I crystallinity (\%)} = [(I_{200} - I_{am})/I_{200}] \times 100 \quad \text{...Mathematical Formula 1}$$

Here, $I_{200}$ represents an X-ray diffraction intensity at $2\theta$ = 22.6°, and $I_{am}$ represents an X-ray diffraction intensity at $2\theta$ = 18.5°.

The amorphous sulfated polysaccharide is not particularly limited, and examples thereof include at least one amorphous sulfated polysaccharide selected from the group consisting of carrageenan, sacran, rhamnan sulfate, fucoidan, chondroitin sulfate, porphyran, funoran, dermatan sulfate, and heparin. As the amorphous sulfated polysaccharide, at least one amorphous sulfated polysaccharide selected from the group consisting of carrageenan, sacran, and funoran is preferred, and carrageenan is more preferred. These amorphous sulfated polysaccharides are preferred because they can stabilize the dispersion of polythiophene.

The amorphous sulfated polysaccharide as a preferred aspect is at least one carrageenan selected from the group consisting of lambda-carrageenan, kappa-carrageenan, and iota-carrageenan. Carrageenan is a polysaccharide that is naturally extracted primarily from red algae. Carrageenan has a structure in which D-galactose is bonded by alternately repeating $\alpha$-1,3 bonds or $\beta$-1,4 bonds. Carrageenan is classified into three types, kappa ($\kappa$), iota ($\iota$), and lambda ($\lambda$), depending on the number of sulfate groups and the presence or absence of an anhydro bond, and any of these

can be used. As carrageenan, for example, a commercially available product can be used, and the commercially available product may be used as it is or a purified product may be used.

As carrageenan, at least one carrageenan selected from the group consisting of iota-carrageenan and kappa-carrageenan is preferred, and iota-carrageenan is more preferred.

In one preferred aspect, the amorphous sulfated polysaccharide is at least one sulfated polysaccharide selected from the group consisting of a sulfated polysaccharide represented by the following general formula (1) and a sulfated polysaccharide represented by the following general formula (2).

[Chem. 4]

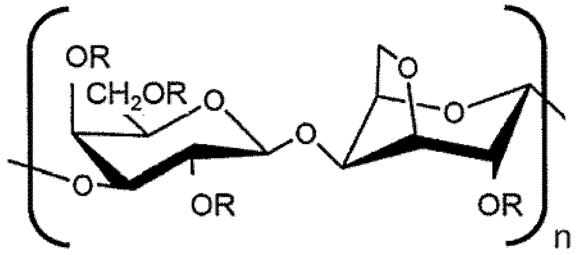

・・・(1)

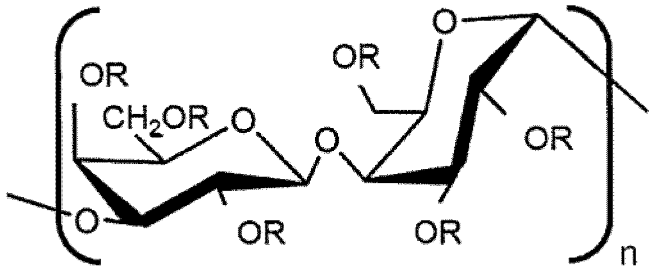

・・・(2)

In the general formulae (1) and (2), each R is independently a hydrogen atom or a group represented by the following general formula (3), at least one of the Rs in the brackets is a group represented by the following general formula (3), and ***n*** represents the number of repetitions of the unit in the brackets.

[Chem. 5]

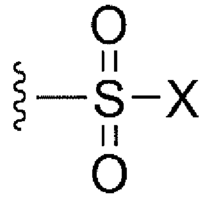

・・・(3)

In the general formula (3), X is a hydroxyl group or $-O^{-}(M^{m+})_{1/m}$, ***m*** is an integer of 1 or more and 3 or less, $M^{m+}$ is an m-valent cation, and a wavy line is a binding site to another atom.

In the general formulae (1) and (2), at least one of the Rs in the brackets is a group represented by the above general formula (3). While the proportion of the group represented by the above general formula (3) is not particularly limited, the substituent amount of the group represented by the general formula (3) (also referred to as a sulfate ester group) is preferably in a range described later.

In the general formulae (1) and (2), ***n*** represents the number of repetitions of the unit in the brackets, in other words, the degree of polymerization. ***n*** is, for example, 100 or more, preferably 100 or more and 10000 or less, more preferably 300 or more and 5000 or less, and particularly preferably 500 or more and 2000 or less. These ranges are preferred because the viscosity of an aqueous dispersion is appropriate.

In the general formula (3), X is a hydroxyl group or $-O^{-}(M^{m+})_{1/m}$. Examples of $M^{m+}$ include a metal ion and an ammonium ion. When ***m*** is 2 or 3, that is, when $M^{m+}$ is a polyvalent cation, $M^{m+}$ forms ionic bonds with two or three $-SO_3^{-}$. As $M^{m+}$, ***m*** is 1 and $M^{m+}$ is $M^{+}$ (monovalent cation) in one preferred aspect.

Examples of the metal ion include an alkali metal ion, an alkaline earth metal ion, a transition metal ion, and another metal ion.

Here, examples of the alkali metal ion include a lithium ion ($Li^+$), a sodium ion ($Na^+$), a potassium ion ($K^+$), a rubidium ion ($Rb^+$), and a cesium ion ($Cs^+$). Examples of the alkaline earth metal ion include a calcium ion ($Ca^{2+}$) and a strontium ion ($Sr^{2+}$). Examples of the transition metal ion include an iron ion, a nickel ion, a palladium ion, a copper ion, and a silver ion. Examples of the other metal ion include a beryllium ion, a magnesium ion, a zinc ion, and an aluminum ion.

Examples of the ammonium ion include not only $NH_4^+$ but also an ammonium ion derived from various kinds of amine in which one or more hydrogen atoms of $NH_4^+$ is replaced with an organic group. Examples of the ammonium ion include $NH_4^+$, a quaternary ammonium cation, an alkanolamine ion, and a pyridinium ion.

As $M^{m+}$, from the aspect of the viscosity of the aqueous dispersion, a sodium ion, a potassium ion, a calcium ion, or a quaternary ammonium cation is preferable, and a sodium ion, a potassium ion, or a calcium ion is more preferable, and a sodium ion ($Na^+$) is especially preferable.

In the general formula (3), X is preferably a hydroxy group or $-O^-M^+$, and particularly preferably a hydroxy group or $-O^-Na^+$.

X included in the group expressed by the above general formula (3) may be only one kind, and may be two or more kinds.

The amount of the sulfate ester group substituent in the amorphous sulfated polysaccharide is preferably 2.0 mmol/g or more and 6.0 mmol/g or less, more preferably 2.0 mmol/g or more and 4.0 mmol/g or less, and particularly preferably 2.5 mmol/g or more and 3.5 mmol/g or less. These ranges are preferred because the dispersion of polythiophene can be promoted.

The amount of the sulfate ester group substituent can be obtained by, for example, Combustion-Ion Chromatography (IC) method (combustion-IC method) described in Examples.

While the number of constituent monosaccharides of the amorphous sulfated polysaccharide is not particularly limited, it is, for example, 200 or more, preferably 200 or more and 20000 or less, more preferably 600 or more and 10000 or less, and still more preferably 1000 or more and 4000 or less. In the above-described carrageenan and the general formulae (1) and (2), since the constituent unit is a disaccharide, two times the degree of polymerization is equivalent to the number of constituent monosaccharides. The number of constituent monosaccharides of the amorphous sulfated polysaccharide can be obtained by, for example, the method described in Examples.

(Polythiophene)

The composite and the aqueous dispersion of the embodiment contain a polythiophene. The polythiophene typically has a monomer unit having a thiophene skeleton. The monomer unit means a constituent unit constituting the polythiophene and derived from a monomer, and means a repeating unit of the polythiophene. The polythiophene preferably has a monomer unit (repeating unit) represented by the following general formula (4).

[Chem. 6]

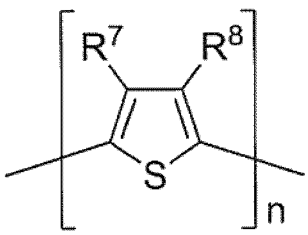

・・・(4)

In the general formula (4), $R^7$ and $R^8$ each independently represents a hydrogen atom, an alkyl group having 1 to 8 carbon atoms, or an alkoxy group having 1 to 8 carbon atoms, or $R^7$ and $R^8$ are linked together to represent a dioxyalkylene group having 1 to 8 carbon atoms, an aromatic ring, or a 3- to 7-membered alicyclic ring, and ***n*** represents the number of repetitions of the unit in the brackets.

When $R^7$ and $R^8$ in the general formula (4) are alkyl groups having 1 to 8 carbon atoms, they may be linear or branched. The alkyl group preferably has 1 to 6 carbon atoms.

When $R^7$ and $R^8$ in the general formula (4) are alkoxy groups having 1 to 8 carbon atoms, they may be linear or branched. The alkoxy group preferably has 1 to 6 carbon atoms.

When $R^7$ and $R^8$ are linked together to form a dioxyalkylene group having 1 to 8 carbon atoms, the number of carbon atoms of the dioxyalkylene group is preferably 1 to 6, more preferably 2 to 4.

When $R^7$ and $R^8$ are linked together to form an aromatic ring, they may form a benzene ring, for example, together

with the carbon atoms to which $R^7$ and $R^8$ are bonded.

When $R^7$ and $R^8$ are linked together to form a 3- to 7-membered alicyclic ring, the alicyclic ring is preferably a 4- to 7-membered ring, more preferably a 5- to 6-membered ring.

The number of repeating units represented by the general formula (4) forming the polythiophene, that is, the value of n, is not particularly limited, and examples thereof include 2 to 50. As the number of the repeating units increases, a property such as a heat shielding property of the polythiophene tends to be improved.

A monomer (thiophene) constituting the repeating unit represented by the general formula (4) is represented by the following general formula (5).

[Chem. 7]

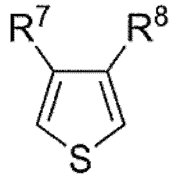

・・・(5)

In the general formula (5), $R^7$ and $R^8$ each independently represents a hydrogen atom, an alkyl group having 1 to 8 carbon atoms, or an alkoxy group having 1 to 8 carbon atoms, or $R^7$ and $R^8$ are linked together to represent a dioxyalkylene group having 1 to 8 carbon atoms, an aromatic ring, or a 3- to 7-membered alicyclic ring.

Examples of the thiophene represented by the general formula (5) preferably include a compound in which the 3-position and the 4-position of the thiophene skeleton are each independently substituted with an alkyl group having 1 to 8 carbon atoms and/or an alkoxy group having 1 to 8 carbon atoms; and 3,4-disubstituted thiophene in which a dioxyalkylene group having 1 to 8 carbon atoms is formed at the 3-position and the 4-position of the thiophene skeleton. More specifically, examples thereof include 3,4-dialkylthiophene, 3,4-dialkoxythiophene, and 3,4-alkylenedioxythiophene. Among these, 3,4-alkylenedioxythiophene is preferred.

Examples of the thiophene represented by the general formula (5) include 3,4-dihexylthiophene, 3,4-diethylthiophene, 3,4-dipropylthiophene, 3,4-dimethoxythiophene, 3,4-diethoxythiophene, 3,4-dipropoxythiophene, 3,4-dibutoxythiophene, 3,4-methylenedioxythiophene, 3,4-ethylenedioxythiophene, and 3,4-propylenedioxythiophene. Among these, 3,4-ethylenedioxythiophene (hereinafter, sometimes abbreviated as EDOT) is preferred.

Specific examples of the polythiophene represented by the general formula (4) include poly(3,4-dihexylthiophene), poly(3,4-diethylthiophene), poly(3,4-dipropylthiophene), poly(3,4-dimethoxythiophene), poly(3,4-diethoxythiophene), poly(3,4-dipropoxythiophene), poly(3,4-dibutoxythiophene), poly(3,4-methylenedioxythiophene), poly(3,4-ethylenedioxythiophene), and poly(3,4-propylenedioxythiophene). Among these, poly(3,4-ethylenedioxythiophene), which is also abbreviated as PEDOT, is preferred.

(Composite)

The composite of the embodiment is a composite containing an amorphous sulfated polysaccharide and a polythiophene. The composite of the embodiment does not use raw materials with a high environmental load, and has an excellent heat-ray absorption property. While a mass ratio of the amorphous sulfated polysaccharide to the polythiophene constituting the composite of the embodiment is not particularly limited, amorphous sulfated polysaccharide/polythiophene (mass ratio) is preferably 60/40 to 90/10, more preferably 50/50 to 85/15, and particularly preferably 60/40 to 80/20. The mass ratio of the amorphous sulfated polysaccharide to the polythiophene can be measured by the method described in Examples.

An aqueous dispersion containing the composite at a concentration of 0.01 wt% has an absorbance at 500 nm of 0.010 or more and 0.200 or less and an absorbance at 1800 nm of 0.200 or more and 1.200 or less, and the absorbance at 500 nm is typically smaller than the absorbance at 1800 nm. The aqueous dispersion containing the composite at the concentration of 0.01 wt% preferably has the absorbance at 500 nm of 0.020 or more and 0.150 or less and the absorbance at 1800 nm of 0.250 or more and 1.000 or less, and more preferably, the absorbance at 500 nm of 0.040 or more and 0.100 or less and the absorbance at 1800 nm of 0.300 or more and 0.800 or less. Because the composite having such a property is excellent in heat-ray absorption, the composite can be used as a heat-ray absorber, a heat-ray absorbing film, and the like.

A value obtained by dividing the absorbance at 1800 nm by the absorbance at 500 nm of the aqueous dispersion containing the composite at the concentration of 0.01 wt% is preferably 4.5 or more, and more preferably 5.0 or more, and particularly preferably 5.5 or more. The higher the value obtained by dividing the absorbance at 1800 nm by the absorbance at 500 nm, the more preferable, as it provides an excellent heat-ray absorption property, and while an upper

limit thereof is not particularly limited, it is typically 8.0 or less. The composite having such a property is particularly excellent in heat-ray absorption and thus preferable.

Compared with the composite containing the sulfate esterified fine cellulose fiber and the polythiophene, the composite of the embodiment can increase a solid content concentration in the aqueous dispersion having a similar viscosity. In one embodiment, the viscosity of the aqueous dispersion containing the composite at a concentration of 2 wt% measured at a rotation speed of 6.0 rpm and at 20°C is preferably 100 mPa s or more and 5000 mPa s or less, more preferably 200 mPa·s or more and 2000 mPa·s or less, and particularly preferably 300 mPa·s or more and 1000 mPa·s or less. When the heat-ray absorbing film having a similar dried film thickness is produced, the aqueous dispersion prepared from the composite of the embodiment can increase a solid content concentration compared with the composite containing the sulfate esterified fine cellulose fiber and the polythiophene, thus can reduce a coating film thickness, resulting in a significantly shortened drying time. When the coating is applied at a similar coating film thickness, a film thickness of the heat-ray absorbing film can be increased by using the aqueous dispersion prepared from the composite of the embodiment compared with the composite containing the sulfate esterified fine cellulose fiber and the polythiophene.

The composite may further contain a component, such as an additive, other than the amorphous sulfated polysaccharide or the polythiophene. The additive may be an inorganic additive or an organic additive.

Examples of the inorganic additive include inorganic particulates. Examples of the inorganic particulates include silica, mica, talc, clay, carbon, a carbonate (for example, calcium carbonate, magnesium carbonate), an oxide (for example, aluminum oxide, titanium oxide, zinc oxide, iron oxide), a ceramic (for example, ferrite), or particulates of a mixture thereof. The inorganic particulates may be contained in the composite, for example, in an amount within a range of 0.09 mass% to 5 mass%.

The composite may contain a functional compound as the organic additive. Examples of the functional compound include a dye, a UV absorber, an oxidation inhibitor, an antistatic agent, and a surfactant. The organic additive may be contained in the composite, for example, in an amount within a range of 0.09 mass% to 5 mass%.

The composite is typically in a solid state. What is obtained by dispersing the composite in a dispersion medium is referred to as a dispersion of the composite, and what is obtained by dispersing the composite in water is referred to as an aqueous dispersion of the composite.

(Method for Producing Composite)

The composite is obtained, for example, by polymerizing the thiophene to produce the polythiophene in the coexistence of the amorphous sulfated polysaccharide and the thiophene. In one embodiment, the composite is obtained by doping the polythiophene with the amorphous sulfated polysaccharide by the polymerization of the thiophene.

Specifically, the composite can be produced by an oxidative polymerization of the thiophene represented by the above general formula (5) in the presence of the amorphous sulfated polysaccharide, a solvent, and an oxidant. For example, the thiophene represented by the general formula (5) and an oxidant are added to a dispersion (for example, an aqueous dispersion) prepared by dispersing the amorphous sulfated polysaccharide in a dispersion medium in advance, and the thiophene is polymerized to produce the polythiophene, thereby obtaining the composite in a state where the composite is dispersed in the dispersion medium. In the obtained composite, although it is not intended to limit the interpretation of a binding mode between the polythiophene and the amorphous sulfated polysaccharide, it is considered that the polythiophene and the amorphous sulfated polysaccharide are complexed in a state where the polythiophene produced by the polymerization reaction is doped with the anion of the amorphous sulfated polysaccharide.

In the production of the composite, the amounts of the thiophene represented by the general formula (5) and the amorphous sulfated polysaccharide that are used as raw material compounds may be adjusted such that the above-described composite can be obtained.

The oxidant (which may be referred to as a polymerization initiator) used in the production of the composite is not particularly limited as long as the thiophene represented by the general formula (5) can be oxidized and polymerized, and examples thereof include peroxydisulfuric acid, sodium peroxodisulfate, potassium peroxodisulfate, ammonium peroxodisulfate, inorganic ferric oxide salt, organic ferric oxide salt, hydrogen peroxide, potassium permanganate, potassium dichromate, alkaline perborate, iron(III) sulfate, and iron(III) chloride. Among these, peroxydisulfuric acid, sodium peroxodisulfate, potassium peroxodisulfate, ammonium peroxodisulfate, iron(III) sulfate, and iron(III) chloride are preferred. One of these oxidants may be used alone or two or more thereof may be used in combination.

In the production of the composite, an amount of the oxidant used is not particularly limited, and is, for example, preferably in a range of 0.1 to 5 equivalents, and more preferably in a range of 0.3 to 2 equivalents per mole of the thiophene represented by the general formula (5).

Upon the production of the composite, when an amount of the monosaccharide constituting the amorphous sulfated polysaccharide is 1 mol, an amount of the thiophene is preferably in a range of 0.2 mol to 5 mol, and more preferably in a range of 0.4 mol to 2.0 mol.

Upon the production of the composite (polymerization of polythiophene (for example, PEDOT)), a concentration

of the polymerization initiator relative to the thiophene (for example, EDOT) can be, for example, in a range of 5 mol% to 92.5 mol%, or in a range of 5.7 mol% to 92.5 mol%. It is preferred that the concentration of the polymerization initiator is in a range of 11.6 mol% to 46.2 mol% because the near-infrared light absorbing property can be further improved. When the polymerization initiator is insufficient, the polymerization of polythiophene (for example, PEDOT) is difficult to proceed, and when the polymerization initiator is too much, the degree of polymerization of polythiophene (for example, PEDOT) tends to decrease. It is considered that a polymer (polythiophene) generated outside the system of the amorphous sulfated polysaccharide has a very small degree of polymerization.

It is sufficient that the dispersion medium used in the production of the composite be one that allows the polymerization reaction of thiophene. Specific examples thereof include an aqueous solvent, preferably water. As the solvent, a lower alcohol such as methanol or ethanol, or an aqueous solvent in which a polar organic solvent such as acetone or acetonitrile is mixed with water may be used. One of these solvents may be used alone or two or more thereof may be used in combination.

In the production of the composite, an amount of the solvent used is not particularly limited, and is, for example, preferably in a range of 1000 ml to 50000 ml, and more preferably in a range of 10000 ml to 40000 ml per mole of the thiophene represented by the general formula (5).

A reaction time and a reaction temperature in the production of the composite may be appropriately set in accordance with the type of thiophene or amorphous sulfated polysaccharide used as the raw material compound, the type of oxidant, and the like. The reaction temperature in the production of the composite is, for example, preferably in a range of 5°C to 90°C, and more preferably in a range of 10°C to 80°C. The reaction time in the production of the composite is, for example, preferably in a range of 1 hour to 96 hours, and more preferably in a range of 5 hours to 48 hours.

As described above, the thiophene represented by the general formula (5) is polymerized in the presence of the amorphous sulfated polysaccharide, thereby obtaining a dispersion of the composite. The composite may be obtained in a state of a dispersion obtained after the reaction (dispersion of the composite), may be obtained as a film-like composite (for example, the heat-ray absorbing film) by applying and drying the dispersion of the composite on a substrate after purification of the dispersion, addition of additives to the dispersion, and the like as needed, or may be obtained as a solid-state (for example, powdery) composite by separating and purifying the composite as needed. The solid-state (for example, powdery) composite may be used as an additive for the heat-ray absorbing film, and may be used to produce a film-like composite (for example, the heat-ray absorbing film) by secondary processing.

(Aqueous Dispersion)

The aqueous dispersion of one embodiment contains an amorphous sulfated polysaccharide, a polythiophene, and water. The aqueous dispersion of another embodiment contains an amorphous sulfated polysaccharide, a polythiophene, at least one resin selected from the group consisting of a water-soluble resin and an aqueous emulsion resin, and water.

(Heat-ray Absorbing Film)

The heat-ray absorbing film of the embodiment contains the above-described composite. In one embodiment, the heat-ray absorbing film has a value obtained by dividing the absorbance at 1800 nm by the absorbance at 500 nm of 4.5 or more, preferably 5.0 or more, more preferably 5.5 or more. The higher the value obtained by dividing the absorbance at 1800 nm by the absorbance at 500 nm, the more preferable, and while the upper limit thereof is not particularly limited, it is typically 8.0 or less.

It is sufficient that the heat-ray absorbing film contains the above-described amorphous sulfated polysaccharide and polythiophene that are derived from the composite, and the heat-ray absorbing film may further contain other components. Examples of other components include the above-described additives and other polymers.

In one embodiment, the heat-ray absorbing film with an excellent heat-ray absorption property derived from the composite can be obtained by adding the composite to a polymer. Examples of the polymer as a matrix of the heat-ray absorbing film include vinyl acetate-polyvinyl alcohol copolymer, polypropylene glycol, polyethylene glycol, polyvinyl alcohol, polyvinyl alcohol-ethylene copolymer, polyvinyl alcohol-butenediol copolymer, polyethylene-vinyl acetate copolymer, cellulose monoalkylate (alkyl group having 1 to 18 carbon atoms), cellulose dialkylate (alkyl group having 1 to 18 carbon atoms), cellulose trialkylate (alkyl group having 1 to 18 carbon atoms), polyethylene, polypropylene, polystyrene, polyalkyl (alkyl group having 1 to 18 carbon atoms) (meth)acrylate, carboxymethylcellulose sodium, cellulose alkyl ether (alkyl group having 1 to 18 carbon atoms), polyethylene terephthalate, polyethylene naphthalate, polyacrylamide and its derivatives, poly(meth)acrylic acid, polyvinyl chloride, cellulose, starch, gelatin, pullulan, dextran, hydroxyalkylene (alkylene having 1 to 18 carbon atoms) (meth)acrylate, polyurethane, nylon-6,6, nylon-6, nylon-6,10, polyvinyl alkylal (alkyl group having 1 to 18 carbon atoms), polyimide, syndiotactic 1,2-polybutadiene, 1,4-polybutadiene, polyisoprene, polystyrene-butadiene copolymer, ABS resin, phenolic resin, siloxane polymer, and silsesquioxane.

The thickness of the heat-ray absorbing film is not particularly limited, and is, for example, 1 μm to 10000 μm, preferably 10 μm to 1000 μm, and more preferably 10 μm to 100 μm. Among the heat-ray absorbing films, one having a small thickness, for example, a thickness of 0.1 μm to 10 μm, may also be referred to as a heat-ray absorbing membrane, but in the present disclosure, the heat-ray absorbing films encompasses the heat-ray absorbing membrane.

While a method for producing the heat-ray absorbing film is not particularly limited, the heat-ray absorbing film can be obtained by, for example, a method in which a dispersion of a composite is applied to a substrate and dried. A method for applying the dispersion of the composite to the substrate is not particularly limited, and examples thereof include wet processes including: coating methods such as a spray coating method, a spin coating method, an air knife coating method, a curtain coating method, a blade coating method, a dip coating method, a casting method, a two-roll coating method, a gate roll press method, a roll coating method, a bar coating method, a die coating method, a gravure method, and a mist method; and patterning methods such as printing and ink jet. Among these, the spin coating method and the casting method are preferred.

A drying method is not particularly limited, and examples thereof include natural drying, heat drying, freeze drying, reduced-pressure drying, hot-air drying, thermal pressure drying, infrared drying, and supercritical drying. A drying temperature is appropriately set in accordance with the drying method, and is, for example, preferably in a range of 50°C to 250°C, and more preferably in a range of 60°C to 150°C. The drying temperature is still more preferably in a range of 80°C to 120°C. A degradation of the heat-ray absorption property of the composite during drying can be prevented or controlled by setting the drying temperature to 250°C or lower. The drying time and the coating quality during drying can be improved by setting the drying temperature high.

Examples of the substrate include a glass plate, a plastic sheet, and a plastic film. Examples of the plastic include polyester, polyethylene, polypropylene, polystyrene, polyimide, poly(meth)acrylic ester, polyamide, polyethylene terephthalate, polyethylene naphthalate, epoxy resin, chlorine-based resin, silicon-based resin, phenolic resin, and blends thereof.

The layered body of the embodiment is a layered body in which an adhesive layer and a release layer are layered (laminated) on one side of the above-described heat-ray absorbing film. By laminating the adhesive layer and the release layer on one side of the heat-ray absorbing film, it is possible to peel off the release layer at the time of use to easily attach the heat-ray absorbing film to the substrate or the like via the adhesive layer. The adhesive layer and the release layer are not particularly limited, and, for example, conventionally known ones can be used as appropriate.

(Coating Material)

While the composite is typically in a solid state, a dispersion of the composite can be used as a coating material (for example, a thermal barrier coating material). That is, the coating material of the embodiment is a coating material containing the above-described composite, and one embodiment includes a coating material containing the above-described composite and a dispersion medium (for example, water), and another embodiment includes a coating material containing the above-described composite, at least one resin selected from the group consisting of a water-soluble resin and an aqueous emulsion resin, and a dispersion medium (for example, water).

For example, a layered body including a composition containing the composite and a substrate coated with the composition may be obtained by coating the substrate, such as a glass plate, with the coating material.

EXAMPLES

While the following describes the embodiment with Examples, the present disclosure is not limited to these examples.

The following sulfated polysaccharides were used in Examples.

Lambda-carrageenan: manufactured by Tokyo Chemical Industry Co., Ltd
Kappa-carrageenan: manufactured by Tokyo Chemical Industry Co., Ltd
Iota-carrageenan-1: manufactured by Tokyo Chemical Industry Co., Ltd
Iota-carrageenan-2: TS gel SV manufactured by Taisho Technos Co., Ltd

<Calculation of the Number of Constituent Monosaccharides of Carrageenan>

0.5 g of carrageenan and 500 g of ion-exchanged water were weighed, dispersed at 60°C for 1 hour, and then filtered through a 0.45-μm membrane filter to prepare a measurement solution. 20 μl of the measurement solution was injected into a gel permeation chromatography measurement apparatus (manufactured by Waters Corporation, Acquity UPLC H-Class Bio), and a number average molecular weight was measured. Standard pullulan was used as a molecular weight standard. The number of constituent monosaccharides was calculated by doubling a value obtained by dividing the

number average molecular weight by a molecular weight of dimer which is a constituent unit of carrageenan.

[Synthesis Example 1]

150 g of DMSO, 16.5 g of acetic anhydride, and 3.2 g of 98% sulfuric acid were put in a sample bottle of 300 ml, and stirred at room temperature of 23°C for about 30 seconds using a magnetic stirrer, thus preparing a fibrillation solution.

Next, 5.0 g of softwood kraft pulp NBKP (manufactured by Nippon Paper Industries Co., Ltd.) was added to the fibrillation solution, which was further stirred at room temperature of 23°C for 120 minutes, thus causing a sulfate esterification reaction. After the stirring, 250 ml of distilled water was added to the fibrillation solution containing cellulose to stop the reaction, and subsequently, a 10 mass% sodium hydroxide aqueous solution was added until pH reached 7, thus neutralizing the reaction solution. Then, supernatant was removed by centrifugation to obtain a solid content.

Further, 1350 ml of distilled water and 1350 ml of ethanol were added to the solid content and stirred until being uniformly dispersed, and then, supernatant was removed by centrifugation to obtain a solid content. The same procedure was repeated to perform cleaning six times in total. A centrifugation speed in each operation was 12000 rpm, and a centrifugation time was 50 minutes. After the cleaning by centrifugation, distilled water was added to the solid content, which was diluted until the total weight became 1000 g, thereby obtaining a heterogeneous mixture containing the sulfate esterified fine cellulose fiber and water.

Next, the heterogeneous mixture was stirred for 3 minutes using a mixer (G5200, manufactured by Biolomix), thereby obtaining 1000 g of aqueous dispersion containing the uniformly dispersed sulfate esterified fine cellulose fiber at a concentration of 0.5 mass%. Subsequently, the obtained aqueous dispersion of the sulfate esterified fine cellulose fiber was dried for 72 hours using a freeze dryer (FDU-2110, manufactured by Tokyo Rikakikai Co., Ltd.), thereby obtaining a sulfate esterified fine cellulose fiber dried body.

Subsequently, 5 g of the sulfate esterified fine cellulose fiber dried body was processed with a dry mill (Wonder Blender WB1, manufactured by Osaka Chemical Co., Ltd.) for 3 minutes to obtain Sample No. 1, which was a sulfate esterified fine cellulose fiber powder.

[Synthesis Example 2]

5.0 g of softwood kraft pulp NBKP (manufactured by Nippon Paper Industries Co., Ltd.) was added to 500 ml of N,N-dimethylformamide (DMF) and cooled to 10°C. To the DMF containing softwood kraft pulp NBKP, 3.6 ml of chlorosulfonic acid was added by drops for 60 minutes under a nitrogen atmosphere, and the mixture was stirred for 1 hour to obtain a reaction solution.

The reaction solution was poured into 5000 ml of saturated sodium acetate solution and allowed to reprecipitate, and then supernatant was removed by centrifugation to obtain a solid content. The solid content was cleaned once with a saturated ethanol solution of sodium acetate, and then cleaned with ethanol until the supernatant liquid became neutral. Then, supernatant was removed by centrifugation to obtain a solid content and distilled water was added to the solid content, which was diluted until the total weight became 1000 g, thereby obtaining a heterogeneous mixture containing the sulfate esterified fine cellulose fiber and water.

Next, the heterogeneous mixture was stirred for 3 minutes using a mixer (G5200, manufactured by Biolomix), thereby obtaining 1000 g of aqueous dispersion containing the uniformly dispersed sulfate esterified fine cellulose fiber at a concentration of 0.5 mass%. Subsequently, the obtained aqueous dispersion of the sulfate esterified fine cellulose fiber was dried for 72 hours using a freeze dryer (FDU-2110, manufactured by Tokyo Rikakikai Co., Ltd.), thereby obtaining a sulfate esterified fine cellulose fiber dried body.

Subsequently, 5 g of the sulfate esterified fine cellulose fiber dried body was processed with a dry mill (Wonder Blender WB1, manufactured by Osaka Chemical Co., Ltd.) for 3 minutes to obtain Sample No. 2, which was a sulfate esterified fine cellulose fiber powder.

<Calculation of the Number of Constituent Monosaccharides of Sulfate Esterified Nanocellulose>

0.12 g of the sulfate esterified fine cellulose fiber powder solid content was dissolved in 63.0 g of 0.5 M copper ethylenediamine solution and kept at 25°C, and then the viscosity was measured by measuring a flow-down time of the solution of the sulfate esterified fine cellulose fiber and copper ethylenediamine using a Cannon Fenske kinematic viscometer tube.

An average degree of polymerization was calculated by the following calculation formula, where $\eta$ was the viscosity of the solution of the sulfate esterified fine cellulose fiber and copper ethylenediamine, and $\eta 0$ was the viscosity of the 0.5 M copper ethylenediamine solution,

$$\text{Limiting viscosity } [\eta] = (\eta/\eta0)/\{c(1 + A \times \eta/\eta0)\}$$

wherein c is a sulfate esterified fine cellulose fiber concentration (g/dL) at the time of viscosity measurement, A is a value specific to the type of solution, and A = 0.28 for the 0.5 M copper ethylenediamine solution, and

$$\text{Average degree of polymerization DP} = [\eta]/aK$$

wherein K and ***a*** are values determined by the types of polymer and solvent used, and K = 5.7 x $10^{-3}$ and ***a*** = 1 for cellulose dissolved in copper ethylenediamine.
The average degree of polymerization of the sulfate esterified fine cellulose fiber was defined as the number of constituent monosaccharides.

<Quantitative Determination of Introduction Amount of Sulfate Ester Group>

A combustion-IC method was used to determine a sulfur content derived from carrageenan or the sulfate esterified fine cellulose fiber. Specifically, dried carrageenan or sulfate esterified fine cellulose fiber powder (0.01 g) was put in a magnetic board, which was burnt in an oxygen atmosphere (flow rate: 1.5 L/minute) in a ring furnace (1350°C), and a generated gas component was absorbed in 3% hydrogen peroxide solution (20 ml). The obtained absorption liquid was diluted with pure water to 100 ml, and a sulfate ion concentration (mass%) was measured by ion chromatography of the dilute solution, and a sulfur introduction amount (mmol/g) derived from the sulfate ester group per gram of carrageenan or sulfate esterified fine cellulose fiber powder was calculated based on the measurement result.

<Method for Measuring Crystallinity>

Using an X-ray diffractometer (XRD) (manufactured by Rigaku Corporation: SMARTLAB-9KW), the crystallinity was calculated from measurement results of a diffraction intensity $I_{200}$ of lattice plane (200 plane) and a diffraction intensity $I_{am}$ of an amorphous portion, with Mathematical Formula 1 below,

$$\text{Cellulose type I crystallinity (\%)} = [(I_{200} - I_{am})/I_{200}] \times 100 \text{ ...Mathematical Formula 1}$$

wherein $I_{200}$ represents an X-ray diffraction intensity at 2θ = 22.6°, and $I_{am}$ represents an X-ray diffraction intensity at 2θ = 18.5°.

<Method for Measuring Viscosity>

100 g of 1 wt% aqueous dispersion of carrageenan or sulfate esterified nanocellulose was subjected to a defoaming process with a defoaming device (manufactured by THINKY Corporation, THINKY MIXER ARE-310) for 10 seconds, and allowed to stand for 24 hours. Subsequently, using a rheometer (manufactured by Thermo Fisher Scientific Inc., HAAKE MARS 40), the viscosity measurement was performed at a rotation speed of 6.0 rpm and a set temperature of 20°C, and the viscosity at 10 minutes after the start of measurement (after the start of rotation) was recorded.
The analysis results of each carrageenan and the sulfate esterified fine cellulose fibers (S-CNF) obtained in the synthesis examples are shown in Table 1.

[Table 1]

| | Sulfated Polysaccharide | | | | |
|---|---|---|---|---|---|
| | Average Degree of Polymerization | Number of Constituent Monosaccharides | Substituent Amount (mmol/g) | Crystallinity | Viscosity of 1 wt% Aqueous Dispersion (mPa•s) |
| Lambda-carrageenan | 950 | 1900 | 3.2 | Amorphous | 817 |
| Kappa-carrageenan | 956 | 1912 | 2.5 | Amorphous | 695 |
| Iota-carrageenan-1 | 676 | 1352 | 3.1 | Amorphous | 1138 |
| Iota-carrageenan-2 | 712 | 1424 | 3.0 | Amorphous | 1020 |
| Synthesis Example 1 | 240 | 240 | 3.1 | 40 | 3772 |

(continued)

| | Sulfated Polysaccharide | | | | |
|---|---|---|---|---|---|
| | Average Degree of Polymerization | Number of Constituent Monosaccharides | Substituent Amount (mmol/g) | Crystallinity | Viscosity of 1 wt% Aqueous Dispersion (mPa•s) |
| Synthesis Example 2 | 140 | 140 | 4.6 | 47 | 3655 |

(Synthesis of PEDOT/Carrageenan or PEDOT/S-CNF)

[Examples 1 to 4 and Comparative Examples 1 to 2]

Ion-exchange water was added to 0.375 g of lambda-carrageenan, kappa-carrageenan, iota-carrageenan-1, iota-carrageenan-2, and the sulfate esterified fine cellulose fiber of the synthesis examples 1 and 2 each to prepare 37.5 g of 1.0 wt% aqueous dispersions. 0.332 g of 3,4-ethylenedioxythiophene (EDOT) was added thereto, and the mixture was irradiated with internal ultrasonic waves for 1 minute to disperse the EDOT. Next, 2.0 g of concentrated hydrochloric acid, 1.0 g of 0.48 g/L iron(III) chloride hexahydrate aqueous solution, and 0.14 g of potassium peroxodisulfate were added to the mixture and stirred at room temperature for 24 hours. After the stirring, dialysis was performed with a dialysis membrane for 72 hours or more to obtain an aqueous dispersion of a composite of poly(3,4-ethylenedioxythiophene) PEDOT/carrageenan or PEDOT/sulfate esterified fine cellulose fiber.

(Change in EDOT Amount)

[Example 5]

An aqueous dispersion of a PEDOT/carrageenan composite was obtained similarly to Example 3 (using iota-carrageenan-1), except that the amount of EDOT charged was changed from 0.332 g to 0.266 g.

[Example 6]

An aqueous dispersion of a PEDOT/carrageenan composite was obtained similarly to Example 3 (using iota-carrageenan-1), except that the amount of EDOT charged was changed from 0.332 g to 0.199 g.

(Analysis of PEDOT/Carrageenan or PEDOT/S-CNF) <Method for Measuring Absorbance>

The aqueous dispersions of the composites of PEDOT/carrageenan or PEDOT/sulfate esterified fine cellulose fiber obtained in Examples 1 to 6 and Comparative Examples 1 and 2 were diluted to 0.01 wt%, and the absorbance was measured across the wavelength range of 200 nm to 1800 nm in 1 nm increments using a near-infrared spectrophotometer manufactured by Agilent Technologies, Inc. The obtained absorbance at 500 nm was evaluated as "absorbance of visible light," and the absorbance at 1800 nm was evaluated as "absorbance of near-infrared light." A numerical value obtained by dividing the absorbance value at 1800 nm by the absorbance value at 500 nm was evaluated as the heat-ray absorption property.

<Quantitative Determination of Carrageenan Content>

The obtained aqueous dispersion of the PEDOT/carrageenan composite was diluted to 0.1 wt%, and 50 mL of the aqueous dispersion was taken. 5 mL of 1 mol/L sulfuric acid was added thereto, and the mixture was heated in an autoclave at 120°C for 60 minutes. After 1 mL of galactosamine hydrochloride was added as an internal standard, 20 μL of the mixture was aliquoted, and 80 μL of 0.5 mol/L sodium hydroxide aqueous solution and 100 μL of PMP (1-phenyl-3-methyl-5-pyrazolone) solution were added thereto and heated at 60°C for 30 minutes. Then, 1 mL of ion-exchanged water, 50 μL of 0.5 mol/L sulfuric acid, and 2 mL of toluene were added, and the mixture was stirred for 30 seconds or more with a touch mixer, and then supernatant was removed by centrifugation. 2 mL of toluene was added to the lower layer, and the mixture was subjected to stirring, centrifugation, and cleaning by supernatant removal, and filtered through a membrane filter. 5 μL of the mixture was injected into an HPLC (high-performance liquid chromatographic method, apparatus: manufactured by Thermo Fisher Scientific Inc., Ultimate 3000 HPLC) to quantitatively determine galactose components. From the galactose concentration after hydrolysis, a ratio (mass ratio) of PEDOT and carrageenan in the PEDOT/carrageenan composite was determined. The PEDOT/S-CNF composite was processed in a similar manner to determine the glucose concentration, and a ratio (mass ratio) of PEDOT and S-CNF in the PEDOT/S-CNF composite was determined.

[Table 2]

| | Sulfated Polysaccharide | I Carrageenan/EDOT or S-CNF/EDOT (Charged Mass Ratio) | Absorbance of Aqueous Dispersion (0.01 wt%) | | | 0.1 wt% Aqueous Dispersion | |
|---|---|---|---|---|---|---|---|
| | | | Absorbance at 500 nm | Absorbance at 1800 nm | Absorbance at 1800 nm /Absorbance at 500 nm | Concentration of Galactose or Glucose after Hydrolysis (wt%) | Carrageenan or S-CNF /PEDOT (Mass Ratio) |
| Example 1 | Lambda-carrageenan | 1.1 | 0.089 | 0.515 | 5.77 | 0.0425 | 70/30 |
| Example 2 | Kappa-carrageenan | 1.1 | 0.086 | 0.519 | 6.07 | 0.0281 | 65/35 |
| Example 3 | Iota-carrageenan-1 | 1.1 | 0.080 | 0.553 | 6.93 | 0.0240 | 66/34 |
| Example 4 | Iota-carrageenan-2 | 1.1 | 0.084 | 0.568 | 6.80 | 0.0239 | 66/34 |
| Comparative Example 1 | Synthesis Example 1 | 1.1 | 0.093 | 0.540 | 5.80 | 0.0256 | 36/64 |
| Comparative Example 2 | Synthesis Example 2 | 1.1 | 0.096 | 0.345 | 3.57 | 0.0270 | 38/62 |
| Example 5 | Iota-carrageenan-1 | 1.4 | 0.086 | 0.549 | 6.42 | 0.0250 | 69/31 |
| Example 6 | Iota-carrageenan-1 | 1.9 | 0.084 | 0.545 | 6.52 | 0.0257 | 71/29 |

(Production of PEDOT/Carrageenan Film or PEDOT/S-CNF Film)

[Examples 7 to 10 and Comparative Examples 3 to 6]

The aqueous dispersions of the composites of PEDOT/carrageenan or PEDOT/sulfate esterified fine cellulose fiber obtained in Examples 1 to 4 and Comparative Examples 1 and 2 were dried and solidified by an evaporator, and then an aqueous dispersion was prepared by redispersing a dry solid in water with adjusting a solid content concentration of the dry solid such that the viscosity (at a rotation speed of 6.0 rpm and a set temperature of 20°C) was about 1200 mPa·s. To 100 g of this aqueous dispersion, 0.1 g of octylphenol ethoxylate (manufactured by Nacalai Tesque, Inc., Triton X-100) was added as a surfactant, and the mixture was stirred well to prepare a coating liquid.
The coating liquid was applied to a polyester film (manufactured by Toray Industries, Inc., Lumirror (registered trademark) T60) with the gap of a doctor blade appropriately adjusted to obtain the coating film thicknesses shown in Table 3, and then dried at 80°C until the coating liquid was dried, thus obtaining the heat-ray absorbing film.

(Analysis of Heat-ray Absorbing Film)

<Method for Measuring Film Thickness>

The film thickness of the obtained heat-ray absorbing film was measured using a 3D measuring laser microscope (manufactured by Olympus Corporation, OLS5100).

<Method for Measuring Absorbance>

The absorbance of the obtained heat-ray absorbing film was measured across the wavelength range of 200 nm to 1800 nm in 1 nm increments using a near-infrared spectrophotometer manufactured by Agilent Technologies, Inc. The obtained absorbance at 500 nm was evaluated as "absorbance of visible light," and the absorbance at 1800 nm was evaluated as "absorbance of near-infrared light." A numerical value obtained by dividing the absorbance value at 1800 nm by the absorbance value at 500 nm was evaluated as the heat-ray absorption property.

(Viscosity of Aqueous Dispersion Containing Composite at Concentration of 2 wt% )

The aqueous dispersions of the composites of PEDOT/carrageenan or PEDOT/sulfate esterified fine cellulose fiber obtained in Examples 1 to 4 and Comparative Examples 1 and 2 were dried and solidified by an evaporator, and then the composite (dry solid) was redispersed in water to prepare an aqueous dispersion containing the composite at a concentration of 2 wt%. The viscosity (at a rotation speed of 6.0 rpm and a set temperature of 20°C) of the aqueous dispersion containing the composite at a concentration of 2 wt% was measured.

[Table 3]

| | Aqueous Dispersion Used | Reconstituted Aqueous Dispersion | | Production Condition | | Viscosity of Aqueous Dispersion Containing Composite at Concentration of 2wt% (mPa•s) |
|---|---|---|---|---|---|---|
| | | Solid Content Concentration (wt%) | Viscosity (mPa•s) | Coating Film Thickness (μm) | Drying Time (min) | |
| Example 7 | Example 1 | 2.5 | 1200 | 40 | 3.5 | 543 |
| Example 8 | Example 2 | 2.5 | 1200 | 40 | 3.5 | 583 |
| Example 9 | Example 3 | 2.75 | 1200 | 36 | 3 | 320 |
| Example 10 | Example 4 | 2.75 | 1200 | 36 | 3 | 351 |
| Comparative Example 3 | Comparative Example 1 | 0.6 | 1200 | 170 | 30 | 20790 |
| Comparative Example 4 | Comparative Example 2 | 0.6 | 1200 | 170 | 30 | 13900 |
| Comparative Example 5 | Comparative Example 1 | 0.6 | 1250 | 40 | 3.5 | 20790 |

(continued)

| | Aqueous Dispersion Used | Reconstituted Aqueous Dispersion | | Production Condition | | Viscosity of Aqueous Dispersion Containing Composite at Concentration of 2wt% (mPa•s) |
|---|---|---|---|---|---|---|
| | | Solid Content Concentration (wt%) | Viscosity (mPa•s) | Coating Film Thickness (μm) | Drying Time (min) | |
| Comparative Example 6 | Comparative Example 2 | 0.6 | 1230 | 40 | 3.5 | 13900 |

[Table 4]

| | Heat-ray Absorbing Film | Absorbance of Heat-ray Absorbing Film | | |
|---|---|---|---|---|
| | Film Thickness after Drying (μm) | Absorbance at 500 nm | Absorbance at 1800 nm | Absorbance at 1800 nm/ Absorbance at 500 nm |
| Example 7 | 0.52 | 0.071 | 0.412 | 5.80 |
| Example 8 | 0.51 | 0.069 | 0.404 | 5.86 |
| Example 9 | 0.50 | 0.066 | 0.421 | 6.38 |
| Example 10 | 0.49 | 0.063 | 0.411 | 6.52 |
| Comparative Example 3 | 0.51 | 0.077 | 0.400 | 5.22 |
| Comparative Example 4 | 0.52 | 0.072 | 0.236 | 3.28 |
| Comparative Example 5 | 0.12 | 0.018 | 0.094 | 5.22 |
| Comparative Example 6 | 0.13 | 0.018 | 0.059 | 3.28 |

Compared with Comparative Examples, the composite of the embodiment can increase the solid content concentration in the aqueous dispersion having a similar viscosity. Therefore, when a heat-ray absorbing film having a similar dried film thickness is produced, the composite of the embodiment can reduce the coating film thickness compared with Comparative Examples 3 and 4, and thus the drying time can be significantly shortened. When the coating is applied at a similar coating film thickness, the composite of the embodiment can increase the film thickness of the heat-ray absorbing film compared with Comparative Examples 5 and 6.

[Example 11]

(Production of PEDOT/Carrageenan-Water-soluble Resin Film)

91.7 g of a butenediol vinyl alcohol copolymer (manufactured by Mitsubishi Chemical Corporation, Nichigo G-Polymer™) and 569.1 g of water were stirred in a 1000 mL container at 40°C for 12 hours to produce a 13.9 wt% resin aqueous solution.

Next, to 20.0 g of the aqueous dispersion of the PEDOT/carrageenan composite obtained in Example 9, 0.018 g of octylphenol ethoxylate (manufactured by Nacalai Tesque, Inc., Triton X-100) was added as a surfactant, then 66.1 g of the 13.9 wt% resin aqueous solution was added, and the mixture was stirred well to prepare a water-soluble resin coating liquid.

The coating liquid was applied to a polyester film (manufactured by Toray Industries, Inc., Lumirror (registered trademark) T60) with a doctor blade having a gap set at 155 μm, and then dried at 80°C for 30 minutes to obtain a water-soluble resin heat-ray absorbing film.

[Example 12]

(Production of PEDOT/Carrageenan-Aqueous Emulsion Resin Film)

7.1 g of the aqueous dispersion of the PEDOT/carrageenan composite obtained in Example 9 was added to 14.1

g of urethane acrylate (manufactured by Daicel-Allnex Ltd., UCECOAT 7200, solid content concentration 65 wt%) while being stirred well, 0.49 g of a photoinitiator (manufactured by BASF, IRGACURE 1173) and 0.10 g of a surface conditioner (manufactured by Nissin Chemical Co., Ltd., Surfynol 104E) were added, and the mixture was stirred well to prepare an aqueous emulsion resin coating liquid.

The coating liquid was applied to a polyester film (manufactured by Toray Industries, Inc., Lumirror (registered trademark) T60) with a doctor blade having a gap set at 110 μm, and then dried at 80°C for 10 minutes. Next, the coating film was cured by ultraviolet irradiation at an illuminance of 200 mW•$cm^2$ and an integrated amount of light of 800 mJ/$cm^2$ with an ultraviolet irradiation device (manufactured by Eye Graphics Company, Eye Grandage ECS-401GX model) to obtain a water-soluble resin heat-ray absorbing film.

[Table 5]

| | Aqueous Dispersion of Composite Used | Film Thickness (μm) | Content of Composite in Dried Film (wt%) | Absorbance of Heat-ray Absorbing Film | | |
|---|---|---|---|---|---|---|
| | | | | Absorbance at 500 nm | Absorbance at 1800 nm | Absorbance at 1800 nm/ Absorbance at 500 nm |
| Example 11 | Example 9 | 8.0 | 6.0 | 0.063 | 0.364 | 5.74 |
| Example 12 | Example 9 | 25.3 | 2.0 | 0.068 | 0.341 | 5.10 |

The composite of the embodiment was found to have an excellent heat-ray absorption property both in an aqueous dispersion state and a film state.

Any combination of the upper limit values and/or lower limit values of the numerical ranges described herein can be used to define a preferred range. For example, any upper limit value and any lower limit value of the numerical ranges described herein can be combined to define a preferred range, any upper limit values of the numerical ranges described herein can be combined to define a preferred range, and any lower limit values of the numerical ranges described herein can be combined to define a preferred range. The numerical ranges expressed herein using the term "to" includes the values described before and after the term "to" as the lower limit value and the upper limit value, respectively.

While the embodiment has been described in detail, specific configurations are not limited to the embodiment, and modifications of designs made without departing from the scope of the present disclosure are included in the present disclosure.

## Claims

**1.** A composite comprising:

an amorphous sulfated polysaccharide; and
a polythiophene.

**2.** The composite according to claim 1,
wherein the amorphous sulfated polysaccharide is at least one amorphous sulfated polysaccharide selected from the group consisting of carrageenan, sacran, rhamnan sulfate, fucoidan, chondroitin sulfate, porphyran, funoran, dermatan sulfate, and heparin.

**3.** The composite according to claim 1 or 2,
wherein the amorphous sulfated polysaccharide is at least one carrageenan selected from the group consisting of lambda-carrageenan, kappa-carrageenan, and iota-carrageenan.

**4.** The composite according to any one of claims 1 to 3,

wherein the amorphous sulfated polysaccharide is at least one sulfated polysaccharide selected from the group consisting of a sulfated polysaccharide represented by the following general formula (1) and a sulfated polysaccharide represented by the following general formula (2),

[Chem. 1]

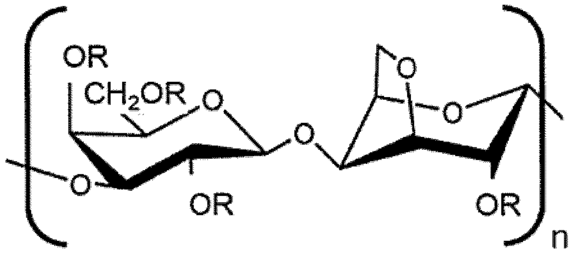

· · · (1)

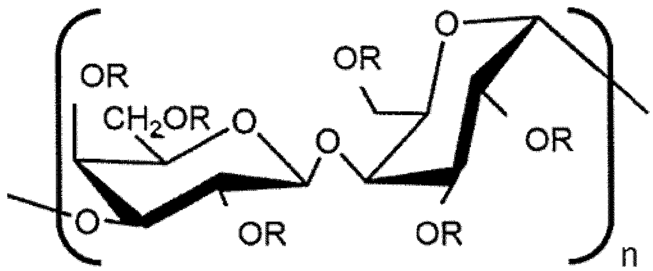

· · · (2)

wherein, in the general formulae (1) and (2), each R is independently a hydrogen atom or a group represented by the following general formula (3), at least one of the Rs in the brackets is a group represented by the following general formula (3), and n represents the number of repetitions of the unit in the brackets,

[Chem. 2]

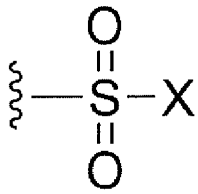

· · · (3)

wherein, in the general formula (3), X is a hydroxyl group or $-O^{-}(M^{m+})_{1/m}$, ***m*** is an integer of 1 or more and 3 or less, $M^{m+}$ is an m-valent cation, and a wavy line is a binding site to another atom.

**5.** The composite according to any one of claims 1 to 4,
wherein an amount of a sulfate ester group substituent in the amorphous sulfated polysaccharide is 2.0 mmol/g or more and 6.0 mmol/g or less.

**6.** The composite according to any one of claims 1 to 5,
wherein a number of constituent monosaccharides of the amorphous sulfated polysaccharide is 200 or more.

**7.** The composite according to any one of claims 1 to 6,
wherein the amorphous sulfated polysaccharide is iota-carrageenan.

**8.** The composite according to any one of claims 1 to 7,
wherein a value obtained by dividing an absorbance at 1800 nm by an absorbance at 500 nm of an aqueous dispersion containing the composite at a concentration of 0.01 wt% is 4.5 or more.

**9.** The composite according to any one of claims 1 to 8,
wherein a value obtained by dividing an absorbance at 1800 nm by an absorbance at 500 nm of an aqueous dispersion containing the composite at a concentration of 0.01 wt% is 4.5 or more, the absorbance at 500 nm is 0.010 or more and 0.200 or less, and the absorbance at 1800 nm is 0.200 or more and 1.200 or less.

**10.** The composite according to any one of claims 1 to 9,
wherein a viscosity of an aqueous dispersion containing the composite at a concentration of 2 wt% is 100 mPa•s or more and 5000 mPa•s or less, the viscosity being measured at a rotation speed of 6.0 rpm and at 20°C.

**11.** An aqueous dispersion comprising:

an amorphous sulfated polysaccharide;
a polythiophene;
at least one resin selected from the group consisting of a water-soluble resin and an aqueous emulsion resin; and
water.

**12.** A heat-ray absorbing film comprising the composite according to any one of claims 1 to 10.

**13.** The heat-ray absorbing film according to claim 12,
wherein a value obtained by dividing an absorbance at 1800 nm by an absorbance at 500 nm is 4.5 or more.

**14.** A layered body, comprising the heat-ray absorbing film according to claim 12 or 13, and an adhesive layer and a release layer layered on one side of the heat-ray absorbing film.

Europäisches Patentamt
European Patent Office
Office européen des brevets

# EUROPEAN SEARCH REPORT

Application Number
EP 24 22 2859

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DUAN ZHONGNAN ET AL: "Conducting poly(3,4-ethylenedioxythiophene) materials with sustainable carrageenan counter-ions and their thermoelectric properties", MATERIALS ADVANCES, vol. 4, no. 22, 1 January 2023 (2023-01-01), pages 5573-5584, XP093271532, ISSN: 2633-5409, DOI: 10.1039/D3MA00547J * page 5574 - page 5575 * | 1-13 | INV. C08L5/00 C08B5/14 C08J5/18 G02B5/22 |
| X | US 10 867 720 B2 (HERAEUS MEDICAL COMPONENTS LLC [US]) 15 December 2020 (2020-12-15) * claims 1,12,13 * | 1-6,8-11 | |
| A | JP 7 378066 B2 (KUMAMOTO PREFECTURE; UNIV KUMAMOTO; CHUETSU PULP IND) 13 November 2023 (2023-11-13) * the whole document * | 1-14 | |

TECHNICAL FIELDS SEARCHED (IPC)

C08L
C08J
C08B
G02B

The present search report has been drawn up for all claims

| Place of search | Date of completion of the search | Examiner |
|---|---|---|
| Munich | 22 April 2025 | Friedrich, Christof |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

1

## ANNEX TO THE EUROPEAN SEARCH REPORT ON EUROPEAN PATENT APPLICATION NO. EP 24 22 2859

This annex lists the patent family members relating to the patent documents cited in the above-mentioned European search report. The members are as contained in the European Patent Office EDP file on
The European Patent Office is in no way liable for these particulars which are merely given for the purpose of information.

22-04-2025

| Patent document cited in search report | Publication date | Patent family member(s) | Publication date |
|---|---|---|---|
| US 10867720 B2 | 15-12-2020 | EP 2997581 A1 | 23-03-2016 |
| | | US 2016086685 A1 | 24-03-2016 |
| | | US 2019131028 A1 | 02-05-2019 |
| | | WO 2014186802 A1 | 20-11-2014 |
| JP 7378066 B2 | 13-11-2023 | JP 7378066 B2 | 13-11-2023 |
| | | JP 2020111747 A | 27-07-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2020111747 A